(19)

Europäisches
Patentamt
European
Patent Office
Office européen
des brevets

(11) **EP 1 796 410 B1**

(12) **EUROPEAN PATENT SPECIFICATION**

(45) Date of publication and mention
of the grant of the patent:
**02.01.2008 Bulletin 2008/01**

(51) Int Cl.:
**_H04Q 7/36_** _(2006.01)_

(21) Application number: **05256935.7**

(22) Date of filing: **10.11.2005**

(54) **Method and apparatus for allocating communication resources to communicate data in a radio communication system**

Verfahren und Vorrichtung zur Kanalzuteilung für die Datenkommunikation in einem Funk-Kommunikationssystem

Procédé et dispositif d'allocation de canaux pour communiquer des données dans un système de communication radio

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(43) Date of publication of application:
**13.06.2007 Bulletin 2007/24**

(73) Proprietor: **Research In Motion Limited**
**Waterloo, Ontario N2L 3W8 (CA)**

(72) Inventors:
• **Pecen, Mark**
**Waterloo, Ontario, N2L 5P3 (CA)**
• **Lazaridis, Mihal**
**Waterloo, Ontario, N2T 2K1 (CA)**
• **Simmons, Sean**
**Waterloo, Ontario, N2T 1E7 (CA)**

(74) Representative: **Fennell, Gareth Charles et al**
**Kilburn & Strode**
**20 Red Lion Street**
**London WC1R 4PJ (GB)**

(56) References cited:
**EP-A- 0 938 208      US-A1- 2004 072 571**
**US-B1- 6 597 672**

**Description**

The present invention relates generally to the communication of data pursuant to a high-speed data communication service, such as an Enhanced Data for GSM Evolution (EDGE) communication service. More particularly, the present invention relates to apparatus, and method by which to allocate communication resources across a plurality of mobile allocation index offsets or radio frequency carriers in a manner such that resources, during a single timeslot, are assigned to a single index offset or radio frequency carrier.

Background of the Invention

Communication technologies have advanced at a rapid rate. Such advancements have permitted, amongst other things, the development and deployment of radio communication systems that permit data to be communicated at high communication thruput rates. Increasingly, data services, previously unavailable or only available by way of wired networks, are performed by way of a radio communication system that provide for high-speed data services. And, with continued advancements in communication technologies, the data thruput rates by which data is communicated shall likely yet further increase. For instance, the infrastructures of GSM (Global System for Mobile communications) networks that provide for GPRS (General Packet Radio Service) have been widely deployed and widely utilized to effectuate data communications. An extension to the general GPRS communication scheme, referred to as EDGE (Enhanced Data for GSM Evolution), is presently undergoing deployment. EDGE-capable communication systems permit data thruput rates that are significantly higher than those achievable in the predecessor GPRS systems.

EP0938208 relates to a transmission method and a transmission apparatus for transmitting signals on the basis of a OFDM/TDMA-system, wherein a plurality of subcarriers being orthogonal to each other are allocated to a variable number of channels, each channel containing a variable number of subcarriers depending on information to be transmitted in said signals, wherein, for the transmission of said signals in a GSM-system having a constant number of predetermined GSM-frequency channels and a constant number of predetermined GSM-timeslots being grouped in GSM-frames, the number of said subcarriers is allocated corresponding to the bandwidth of said GSM-frequency channels, so that a multiple of one resulting OFDM/TDMA-timeslot matches with one or a multiple of one GSM-timeslots, wherein a pilot symbol is allocated to every n-th subcarrier in said GSM-frequency-channels, whereby n is an integer and >1, and wherein said signals are transmitted.

US6597672 relates to a mobile communication network, in which the chance of achieving multichannel connections is increased by determining if certain physical channels should be made idle to facilitate multi-channel connections and marking the channels that should be made idle. The marked channels may be moved actively, in which case the channels to which connections should be moved are selected, and the moving of connections to the selected channels is initiated. The marking and/or moving of the connection or connections is initiated, for example, when a predetermined number of attempts to allocate multichannel connections have failed, or when the network situation is such that the chance of establishing multichannels is low and should be increased, or when an establishment of multichannel connection is attempted unsuccessfully.

While EDGE-capable systems represent a significant improvement in terms of achievable data thruput rates, there is a continuing need to increase yet further the achievable data thruput rates to permit increasingly data-intensive communication services to be performed in a timely manner.

Operation of an EDGE-capable communication system is set forth in a promulgation of an operating specification. The operating specification defines, amongst other things, the channel structure that is used in EDGE-based communications. Multiple carriers are available for use, sometimes defined logically in terms of mobile index allocation offsets. However, due various requirements, communication resources that are allocated upon which to communicate data to perform a communication service are allocated upon a single carrier. Communication resources, to date, are not allocated upon multiple carriers or, more generally, across a plurality of mobile allocation index offsets.

If a manner could be provided in a high-speed data radio communication system to utilize more fully communication resources available across a plurality of radio carriers, increased data thruput rates would be achievable.

It is in light of this background information that the significant improvements of the present invention have evolved.

**Brief Description of the Drawings**

Figure 1 illustrates a functional block diagram of an exemplary communication system that includes an embodiment of the present invention as a portion thereof.

Figure 2 illustrates a representation of exemplary communication resource allocation made pursuant to operation of an embodiment of the present invention.

Figure 3 illustrates a method flow diagram listing the method of operation of an embodiment of the present invention.

## Detailed Description

The present invention, accordingly, advantageously provides apparatus and method for use in the communication of data pursuant to a high-speed data radio communication service, such as EDGE (Enhanced Data for GSM Evolution) data communicated to perform a data communication service in an EDGE-capable communication system.

Through operation of an embodiment of the present invention, the communication resources are allocated across a plurality of mobile allocation index offsets by which to communicate the data. Allocations are made in a manner that resources, during a single timeslot, are assigned on a single carrier, i.e., a single index offset.

By permitting the resource allocation across radio carriers of a plurality of radio carriers, the likelihood of resource availability during any particular timeslot is greater than the likelihood of a corresponding level of resources being available at a single carrier. Existing resource allocation schemes generally limit the allocation of resources pursuant to a communication session to a single carrier.

A contiguous series or sequence, such as a block, of time slots can be allocated for the performance of a data communication service during a communication session. When a contiguous sequence is available within a frame across a plurality of radio carriers, the data thruput, and resultant communication of the data, is more likely to be greater than that available when allocations are limited to those made upon a single carrier. Even if contiguous sequences, across a plurality of carriers are not available within a single frame, the likelihood of greater levels of resources being available across the plurality of radio carriers increases the likelihood of improved data thruput rate performance.

In one aspect of the present invention, apparatus is embodied at a network part of the data radio communication system. The apparatus embodied at the network part comprises an analyzer. The analyzer analyzes communication resource requirements needed to, or otherwise requested to, be provided to communicate data to perform a selected communication service. The analyzer determines, for instance, the number of time slots that are needed to be allocated to the communication session to permit the data to be communicated between a set of communication stations. Determinations made by the analyzer are made dynamically, such as on a frame basis, upon a group of frames basis, or upon another basis, all in a manner to provide resource allocation to communicate data.

In another aspect of the present invention, apparatus embodied at the network part comprises a resource allocator. The resource allocator allocates resources to permit the communication of the data to perform a communication service. The resources are allocated, e.g., responsive to analysis made of the communication requirements required to communicate the data. The communication resources are defined in terms of timeslot allocations upon mobile allocation index offsets. The resources are allocated such that, for any timeslot within a time frame, the resources are allocated upon a single index offset. That is to say, resources that are allocated are not limited to those of a single carrier, but rather are selectable from across a plurality of available carriers, howsoever logically defined, within the constraint of resources being allocated, at any one time, upon a single one of the carriers.

In another aspect of the present invention, apparatus embodied at the network part includes a message generator. The message generator generates an allocation message that includes values for identifying the communication resources that are allocated to communicate data, such as pursuant to a communication session to perform a data communication service. The allocation message, once generated, is communicated from the network of the communication system to a remote station, e.g., a mobile station. When point-to-multipoint communications are to be performed, an allocation message is sent so that each of the mobile stations receives the allocation message. And multiple point-to-point communication sessions are effectuable, with allocation messages being generated and sent for each of the separate communication sessions.

In another aspect of the present invention, apparatus is embodied at a communication station that receives data. The communication station forms, for instance, a mobile station that receives data communicated thereto by a network of the communication system.

Apparatus embodied at the communication station includes a detector that is configured to detect an allocation message delivered to the communication station. The allocation message identifies communication resources that are allocated to the communication station pursuant to the communication of data. The resources that are allocated, and identified in the message, are defined in terms of mobile allocation index offsets. The resources are allocated such that, for any timeslot within a time frame, resources are allocated upon a single one of the radio carriers.

The apparatus embodied at the communication station includes a controller that controls operation of the communication station responsive to the allocation message delivered to the communication station.

Through the allocation of communication resources across a plurality of radio carriers in which a single radio carrier is allocated with resources during a timeslot, improved data thruput rates are achievable.

In these and other aspects, therefore, apparatus and method is provided for a network part of an EDGE-capable communication system that provides a high speed communication service that defines mobile allocation index offsets. An analyzer is adapted to receive an indication of a characteristic of the data that is to be communicated pursuant to the communication service. The analyzer is configured to analyze communication requirements required for communication of the data. A resource allocator is adapted to receive an indication of the analysis made by the analyzer. The resource allocator is configured to allocate resources, defined in terms of mobile allocation index offsets and timeslots thereon. The resources are allocated such that, for any timeslot, within a time frame, resources are allocated upon a single one of the radio carriers.

In these and other aspects, further apparatus and method is provided for a communication station operable for communication of data in a mobile allocation index offset communication scheme. A detector is configured to detect an allocation message delivered to the communication station. The allocation message identifies communication resources allocated to the communication station pursuant to the communication of the data. The resources that are allocated are defined in terms of timeslots defined on a mobile allocation index offset. And allocations are made across a plurality of index offsets. The resources are allocated such that for any timeslot within a time frame, resources are allocated upon a single one of the radio carriers. A controller is adapted to receive an indication of detections made by the detector. The controller is configured to control operation of the first communication station responsive to the detections made by the detector.

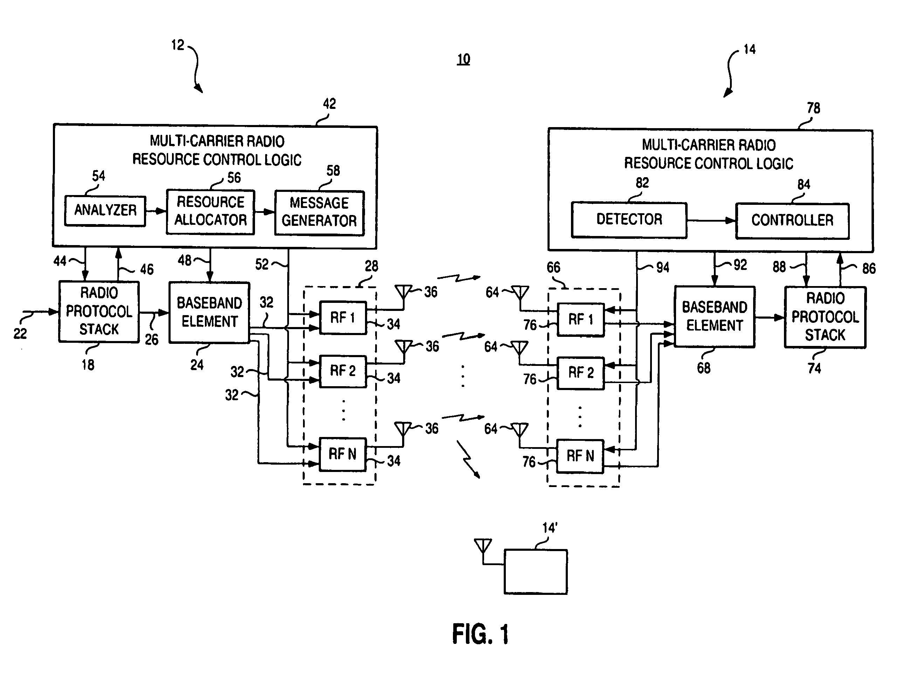

With these aspects in mind, therefore, reference is first made to Figure 1 that illustrates a communication system, shown generally at 10. The communication system is exemplary of a communication system in which an embodiment of the present invention is operable. In the exemplary implementation, the communication system 10 comprises a data radio communication system that is EDGE-capable, that is, provides for EDGE (Enhanced Data for GSM Evolution) data services. The following description shall describe exemplary operation of the communication system in terms of its exemplary implementation as an EDGE-capable system, capable of providing EDGE-based communication services. In other implementations, an embodiment of the present invention is analogously operable to that described below with respect to its implementation in the EDGE-capable communication system.

The communication system 10 includes a set of communication stations, communication station 12 and communication station 14. The communication station 12 is representative of elements of a network part of the communication system. The communication station 12 shall be referred to herein, at times, as a network station 12. And, the communication station 14 is representative of a mobile station. The communication station 14 shall herein, at times, be referred to as a mobile station 14. During their operation, either of the communication stations 12 and 14 is capable of generating EDGE data pursuant to performance of an EDGE data service. Operation shall be described with respect to performance of a downlink communication service, i.e., communication of data from the network station 12 to the mobile station 14. Operation of the communication system pursuant to uplink data communications are analogous.

A communication station 14' is also shown in Figure 1. The communication station 14' is representative of another mobile station that is capable of communicating with the network station 12. Multiple point-to-point data communications, as well as point-to-multiple point data communications are effectuable during operation of the communication system. Separate EDGE communication services as well as multicast EDGE communication services are performable during operation of the communication system.

The communication system is operable in general conformity with the protocols and procedures set forth in an appropriate EDGE/GPRS/GSM (Enhanced Data for GSM Evolution/General Packet Radio Service/Global System for Mobile communications) operating specification. Amongst the protocols are definitions of an EDGE channel structure. A TDMA (Time Division Multiple Access) scheme is defined in which groups of eight time slots form a frame, and communication resource allocations are made by allocating time slots within frames during which data is communicated. A maximum transmission rate of 59.2 kb/s per time slot is presently provided. When a communication service is to be performed, communication resources, i.e., time slots within frames defined upon the carriers available for communication, are allocated for the communication of the EDGE data. As each frame includes eight time slots, at least theoretically, all eight time slots of the frame can be allocated to a single communication session, i.e., for the communication of the data between a set of communication stations to perform a communication service. A maximum, theoretical transmission rate of 473.6 kb/s (8*59.2 kb/s = 473.6 kb/s) is available per frame. However, in actual practice, allocation of such a large number of time slots per frame on a single carrier is unachievable. Other operating requirements of the EDGE/GPRS/GSM system necessitate that a mobile station make various measurements. Measurements must be made, e.g., upon signals broadcast in cells adjacent to the cell in which the mobile station is positioned. The operating specifications, TS 45.008 [5] and TS 45.002 [2], Annex B specify and define certain of these measurements. Additionally, time slots are sometimes also allocated to perform other data and traffic services.

Competition for the communication resources limits the availability of time slots, particularly contiguous time slots that are available to be allocated to effectuate a communication service. For example, if there is a sixty percent probability of availability of a single time slot for assignment, the statistical probability of six contiguous time slots on a single carrier, i.e., a single mobile allocation index offset, within a frame being available is only 4.67 percent. And, the probability of all eight contiguous time slots of a frame on a single carrier being available drops to 1.68 percent. Even disregarding the limitations due to the need of a mobile station to make measurements, there is a statistically small likelihood that multiple, contiguous time slots would be available on a single carrier for allocation to communicate data pursuant to a particular communication service. Contiguous time slots, or other additional time slots, are sometimes available on other radio carriers. However, to date, particularly in an EDGE-capable system, allocating time slots on different radio carriers is not permitted.

In the illustration of Figure 1, the communication stations 12 and 14 are functionally represented, formed of functional elements that are implementable in any desired manner. And, the functions performed by the various elements need not necessarily be positioned together at a common physical location but can be distributed across separate physical devices. For example, the elements shown to form portions of the network station 12 need not be positioned at a single physical location, e.g., at a base transceiver station, but rather can be distributed across several physical locations, including, for instance, a base station controller of the network part of the communication system.

The network station here shows its transmit chain portion and includes a radio protocol stack 18 to which user application data is applied by way of the line 22. The user application data is for communication to one or more mobile stations pursuant to one or more EDGE communication sessions. The radio protocol stack includes various logical layers including a radio resource management (RRM) layer. The network station further includes a baseband element 24 to which data is provided, here represented by way of the lines 26. The baseband element performs various baseband operations, such as baseband processing, modulation, and channel coding.

The network station also includes a radio element 28 to which the data is applied from the baseband element, here by way of the lines 32. The radio element is formed, at least functionally, of radio frequency transceiver front ends 34. N radio transceivers are shown in Figure 1, each of which is coupled to an antenna transducer 36. The transducers transduce the data into electromagnetic form for communication to the communication station 14, or a plurality of communication stations 14.

Pursuant to an embodiment of the present invention, the network station 12 also includes a multi-carrier radio resource control logic element 42. The element 42 is at least functionally coupled to the radio protocol stack 18, here by way of the lines 44 and 46. The element is coupled to the baseband element 24, here by way of the lines 48. And, the control logic element is coupled to the radio element 28, here by way of the lines 52. The logic element, in the exemplary implementation, is embodied at a radio resource management logical layer.

The multi-carrier radio resource control logic element includes an analyzer 54, a resource allocator 56, and an allocation message generator 58. The analyzer 54 receives indications of the data that is to be communicated by the network part to a mobile station pursuant to effectuation of a communication service during a communication session. The indication of the characteristic comprises, for instance, the amount of data that is to be communicated, or some type of indicia that, through analysis by the analyzer, permits the communication requirements to communicate the data to be analyzed. Indications of the analysis performed by the analyzer are provided to the resource allocator.

The resource allocator allocates communication resources based upon the analysis made by the analyzer together with indications of data scheduling information. The communication resource allocations are made across a plurality of radio carriers. In the exemplary implementation, a mobile allocation index offset and time slot combination is provided for each of the allocations made by the allocator. Allocations are made such that, for a single timeslot, resources are assigned on a single carrier. But, resources are assignable upon successive, or sequential, timeslots on different ones of the plurality of radio carriers. The number of radio carriers across which the allocations can be made is also dependent upon the capabilities of the communication stations. For an allocation to be permitted, the communication stations must further be capable of communicating at the frequency of the radio carrier. And, the allocations made by the resource allocator are also dependent upon resource availability, indications of which are further applied to the radio resource control logic.

The resource allocator generates, or causes to be generated, control messages that are provided to the radio protocol stack, the baseband element, and the RF element to control their operation responsive to the allocation of resources made by the allocator. And, an indication of the allocated resources is also provided to the allocation message generator 58. The allocation message generator generates an allocation message that is provided to one or more of the RF transceiver front ends 34 of the RF element 28. The RF transceivers communicate the allocation message to the mobile station to inform the mobile station of the allocated resources.

The mobile station 14 includes structure analogous to the structure of the network station. The mobile station includes structure analogous to the structure forming the network station wherein, here, the receive chain portion of the mobile station is shown. The mobile station is here shown to include an antenna transducer 64, an RF element 66, a baseband element 68, and a radio protocol stack 74. The RF element includes a plurality of RF transceiver front ends 76 similar to the transceivers 34, with different ones of the transceivers being operable at different carrier frequencies.

The mobile station also includes a multi-carrier radio resource control logic element 78 of an embodiment of the present invention. The element 78 includes a detector 82 and a controller 84. The radio resource control logic element is coupled, at least functionally, to the radio protocol stack by way of the lines 86 and 88, to the baseband element 92, and to the RF transceiver front ends of the RF element by way of the lines 94.

The detector 82 operates to detect the allocation message sent by the network station to the mobile station and received at the RF element. The detector extracts values contained in the allocation message, or otherwise operates to identify the communication resources to be allocated for the communication of the data. Detections made by the detector are provided to the controller 84. And, the controller operates to control operation of the mobile station so that the mobile station receives, and operates upon, the communicated data. The controller, for instance, controls operation of the various elements of the mobile station to ensure that the elements are operable at the proper times to receive the data communicated upon the different carriers.

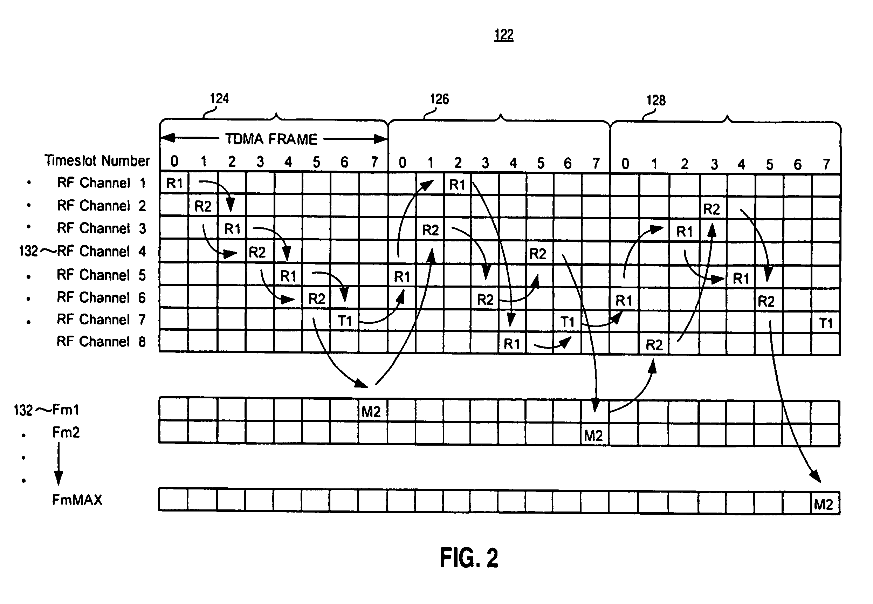

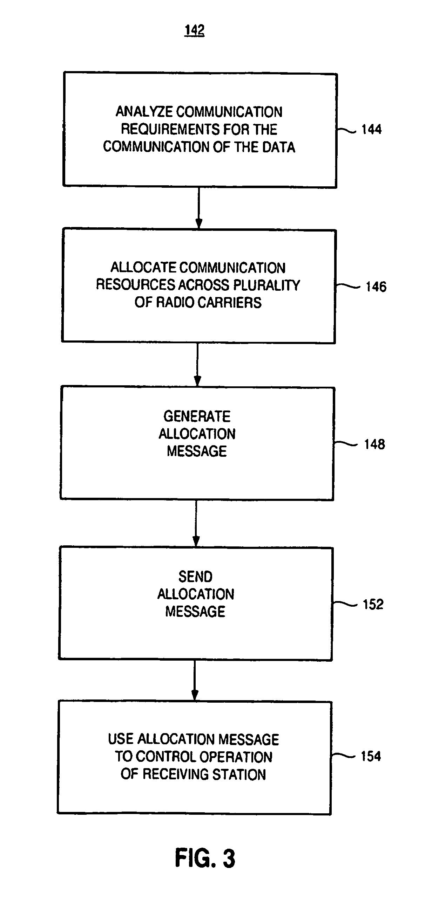

Figure 2 illustrates a representation, shown generally at 122, of communication resource allocations made for the communication of data pursuant to operation of an embodiment of the present invention. The representation illustrates three successive TDMA frames, frames 124, 126, and 128, each of which includes eight time slots, numbered 0-7 in Figure 3. Eight radio frequency carriers 132, identified as RF channels 1-8 of the inactive cell and carriers Fm 1-FmMAX of an adjacent cell all identify carriers identified in the exemplary communication system. During different timeslots, communication resources are allocated on differing carriers, and resources are not allocated concurrently on more than one carrier. The references R1 and R2 are shown in Figure 3 to identify the two carriers upon which data is communicated in the example resource allocation in which two carriers are available upon which to communicate data upon any two adjacent time slots. The indications T and M identify periods during which data is transmitted by the mobile station and during which measurements are made by the mobile station, respectively.

Resource allocations are made, by the resource allocator 56 shown in Figure 1, to maximize the sum of downlink time slots allocated to a single mobile station given the constraint that resource allocations are not made on separate radio carriers during concurrent time slots while also observing the reaction times Tta, Ttb, Tra, and Trb, as defined in the TS-45.002[2], Annex B specification. The reaction times, generally, identify the time required of a mobile station to get ready to transmit or to receive, respectively, before receiving a subsequent burst, transmitting a subsequent burst, or performing a measurement on an adjacent-cell signal.

In the exemplary implementation, the carrier/time slot combinations are selected in terms of an MAIO (Mobile Allocation Index Offset) scheme by "scavenging" for available resources according to the following equation:

$$MAX : \sum_{t=1}^{Nt} \sum_{R=1}^{Nr} S_{tR} u_{tR} ; u \in \{0,1\}$$

$$St : u = \begin{cases} a = 1 \wedge f_r \neq f_{r+1} \wedge u_{t-1R} = 0 : 1 \\ Else : 0 \end{cases}$$

Where:

$t$ = timeslot number

$R$ = RF deck number (both transmit and receive)

$Nt$ = Maximum number of timeslots in allocation

$Nr$ = Maximum number of RF decks available for simultaneous reception in mobile terminal

$S_{tR}$ = Radio resource of timeslot "t" on RF deck "R" for mobile receiver

$u_{tR}$ = Utilization of timeslot "t" on RF deck "R" permitted according to the reaction

time constraints (Boolean)

$a$ = Timeslot availability for allocation to mobile downlink (Boolean)

The resources that are allocated pursuant to operation of an embodiment of the present invention are not limited to those available upon a single index offset, but rather are permitted to be allocated across a plurality of index offsets. As a result, a substantially increased possibility of communication resources is likely to be available for allocation and use to communicate data. As EDGE-based, as well as other types of, communication services are increasingly data-intensive, the increased availability of communication resources permits data to be communicated more quickly than that conventionally available.

Figure 3 illustrates a method flow diagram, shown generally at 142, representative of a method of operation of an embodiment of the present invention by which to communicate data between a set of communication stations in a communication scheme that provides for mobile allocation index offset. First, and as indicated by the block 144, communication requirements required for the communication of the data are analyzed. The analysis is performed responsive to an indication of a characteristic of the data.

Then, and as indicated by the block 146, communication resources are allocated across a plurality of radio carriers for the communication of the data. The resources are allocated such that for any particular time period, resources are allocated upon a single one of the radio carriers.

Thereafter, and as indicated by the blocks 148 and 152, an allocation message is generated and sent by a sending communication station to a receiving communication station that identifies allocations of the communication resources. And, as indicated by the block 154, the allocation message is used at the receiving communication station to control its operation pursuant to communication of data across the plurality of radio carriers.

The performance, measured in terms of data thruput rates of a high-speed data service is improved by increasing the likelihood that greater amounts of communication resources can be made available to effectuate a data communication service. Increasingly data-intensive data communication services are better able to be carried out without noticeable delay.

The previous descriptions are of preferred examples for implementing the invention, and the scope of the invention should not necessarily be limited by this description. The scope of the present invention is defined by the following claims.

**Claims**

1. Apparatus (42) for a network part of an EDGE, Enhanced Data for GSM Evolution,-capable communication system (10) that provides a high speed communication service and that defines communication for mobile allocation index offset, said apparatus comprising:

   an analyzer (54) adapted to receive an indication of a characteristic of the data that is to be communicated pursuant to the high speed communication service, said analyzer configured to analyze communication requirements required for communication of the data and to determine needed resources in a manner that permits dynamic resource allocation;

   a resource allocator (56) adapted to receive an indication of the analysis made by said analyzer, said resource allocator configured to allocate resources defined in terms of the mobile allocation index offsets for communication of the data, the resources allocated across a plurality of mobile allocation index offsets such that for any time period, within a time frame, resources are allocated upon a single one of the mobile allocation index offsets; and

   an allocation message generator (58) adapted to receive an indication of the allocation made by said resource allocator, said allocation message generator configured to generate an allocation message identifying the allocation made by said resource allocator.

2. The apparatus (42) of claim 1 wherein said resource allocator (56) is further adapted to receive an indication of selection of single mobile allocation index offset per time period operation by which to communicate the data, the resources allocated by said resource allocator further responsive to the indication of the selection of the single mobile allocation index offset per time period operation.

3. The apparatus (42) of claim 2 wherein the network part (12) is operable to communicate with a mobile station (14), and wherein the allocation message generated by said allocation message generator (58) is sent to the mobile station.

4. The apparatus (42) of claim 1 wherein the network part (12) comprises a radio part having radio elements (28) operable at a plurality of radio carriers across which said resource allocator allocates the resources.

5. The apparatus (42) of claim 4 wherein said resource allocator (56) is further configured to generate a radio part control message for application to the radio elements (28) of the radio part to control operation thereof.

6. The apparatus (42) of claim 5 wherein the radio part control message causes individual ones of the radio elements (28) to be operable at least during periods corresponding to time periods during which the individual ones of the radio carriers are allocated for communication.

7. The apparatus (42) of claim 1 wherein the network part (12) comprises a baseband part (24) and wherein said resource allocator (56) is further configured to generate a baseband part control message for application to the baseband part to control operation pursuant to allocations made by said resource allocator.

8. The apparatus (42) of claim 7 wherein the baseband part control message causes the baseband part (24) to be operable at least during periods corresponding to time periods during which communication resources are allocated upon any of the plurality of radio carriers.

9. An apparatus (78) for a mobile station (14) operable in an EDGE-, Enhanced Data for GSM Evolution, capable communication system that provides a high speed communication service and that defines mobile allocation index offset, said apparatus comprising:

a detector (82) configured to detect an allocation message delivered to the mobile station, the allocation message identifying communication resources allocated to the mobile station pursuant to the communication of the data, the resources allocated to the mobile station defined in terms of mobile allocation index offsets across a plurality of mobile allocation index offsets, the resources allocated such that for any particular time period within a time frame, resources are allocated upon a single one of the mobile allocation index offsets; and
a controller (84) adapted to receive an indication of detections made by said detector, said controller configured to control operation of the mobile station responsive to the detections made by said detector.

10. The apparatus (78) of claim 9 wherein the mobile station comprises a radio part having radio elements (66) operable at the plurality of radio carriers across which communication resources are identified in the allocation message detected by said detector.

11. The apparatus (78) of claim 10 wherein said controller (84) is further configured to generate a radio part control message for application to the radio part to control operation thereof responsive to allocations identified in the allocation message.

12. A method (142) for communicating in a high speed communication service in an EDGE-, Enhanced Data for GSM Evolution, capable communication system that provides for mobile allocation index offset, said method comprising the operations of:

analyzing (144), at a network part, communication requirements required for communication of data pursuant to the high speed communication responsive to an indication of a characteristic of the data to determine needed resources in a manner that permits dynamic resource allocation;
allocating (146), at the network part, responsive to analysis made during said operation of analyzing, resources across a plurality of mobile allocation index offsets, the resources allocated across a plurality of mobile allocation index offsets such that, for any particular time period, resources are allocated upon a single one of the mobile allocation index offsets; and
generating (148) an allocation message identifying the allocation made during said operation of allocating.

13. The method (142) of claim 12 further comprising the operations of:

sending (152) the allocation message that identifies allocations made during said operation of allocating from the network part to a mobile station; and
using (154) the allocation message at the mobile station to control operation thereof pursuant to communication of the data across the plurality of mobile allocation index offsets allocated during said operation of allocating.

14. The method (142) of claim 13 wherein said operation of using (154) comprises applying radio part control messages to radio elements of the mobile station, the radio part control messages causing operation of the radio elements to permit reception of the data communicated by way of the communication resources allocated during said operation of allocating.

15. The method (142) of claim 14 wherein allocations of the resources made during said operation of allocating (146) are further responsive to reaction times required of operation of the radio elements of the radio part.

16. The method (142) of claim 15 wherein the reaction times comprise time periods required of the radio elements to tune to a mobile allocation index offset of the plurality of mobile allocation index offsets.

17. The method (142) of claim 15 wherein resources allocated during said operation of allocating (146) are further responsive to non-communication measurement requirements required of at least one of the network part and the mobile station.

**Patentansprüche**

1. Vorrichtung (42) für ein Netzwerkteil eines EDGE, Enhanced Data for GSM Evolution,-fähigen Kommunikationssystems (10), das einen Kommunikationsdienst mit hoher Geschwindigkeit zur Verfügung stellt und das eine Kommunikation für einen mobilen Zuordnungsindex-Offset definiert, wobei die Vorrichtung umfasst:

   Eine Analyseeinrichtung (54), die geeignet ist, einen Hinweis einer Charakteristik der Daten, die entsprechend dem Kommunikationsdienst mit hoher Geschwindigkeit zu kommunizieren sind, zu empfangen, wobei die Analyseeinrichtung konfiguriert ist, Kommunikationserfordernisse, die für eine Kommunikation der Daten erforderlich sind, zu analysieren und benötigte Ressourcen in einer Weise, welche eine dynamische Ressourcenzuordnung ermöglicht, zu bestimmen,
   eine Ressourcen-Zuordnungseinrichtung (56), die geeignet ist, einen Hinweis der Analyse, welche durch die Analyseeinrichtung vorgenommen ist, zu empfangen, wobei die Ressourcen-Zuordnungseinrichtung konfiguriert ist, Ressourcen, die in Zeiten der mobilen Zuordnungsindex-Offsets für eine Kommunikation der Daten definiert sind, zuzuordnen, wobei die Ressourcen über eine Vielzahl von mobilen Zuordnungsindex-Offsets zugeordnet sind, derart, dass Ressourcen für jede Zeitdauer in einem Zeitfenster nach einem einzelnen der mobilen Zuordnungsindex-Offsets zugeordnet sind, und
   eine Zuordnungsnachrichten-Erzeugungseinrichtung (58), die geeignet ist, einen Hinweis der Zuordnung, welche durch die Ressourcen-Zuordnungseinrichtung vorgenommen ist, zu empfangen, wobei die Zuordnungsnachrichten-Erzeugungseinrichtung konfiguriert ist, eine Zuordnungsnachricht, welche die durch die Ressourcen-Zuordnungseinrichtung vorgenommene Zuordnung identifiziert, zu erzeugen.

2. Vorrichtung (42) nach Anspruch 1, wobei die Ressourcen-Zuordnungseinrichtung (56) weiterhin geeignet ist, einen Hinweis einer Auswahl eines einzelnen mobilen Zuordnungsindex-Offsets für einen Zeitdauervorgang, durch welchen die Daten zu kommunizieren sind, zu empfangen, wobei die Ressourcen, welche durch die Ressourcen-Zuordnungseinrichtung zugeordnet sind, weiterhin auf den Hinweis der Auswahl des einzelnen mobilen Zuordnungsindex-Offsets für einen Zeitdauervorgang antworten.

3. Vorrichtung (42) nach Anspruch 2, wobei das Netzwerkteil (12) wirksam ist, mit einer mobilen Station (14) zu kommunizieren, und wobei die Zuordnungsnachricht, welche durch die Zuordnungsnachrichten-Erzeugungseinrichtung (58) erzeugt ist, an die mobile Station gesendet ist.

4. Vorrichtung (42) nach Anspruch 1, wobei das Netzwerkteil (12) ein Funkteil umfasst, das Funkelemente (28) aufweist, welche an einer Vielzahl von Funkträgern, über welche die Ressourcen-Zuordnungseinrichtung die Ressourcen zuordnet, wirksam sind.

5. Vorrichtung (42) nach Anspruch 4, wobei die Ressourcen-Zuordnungseinrichtung (56) weiterhin konfiguriert ist, eine Funkteil-Steuerungsnachricht für eine Anwendung für die Funkelemente (28) des Funkteiles zu erzeugen, um den Betrieb davon zu steuern.

6. Vorrichtung (42) nach Anspruch 5, wobei die Funkteil-Steuerungsnachricht individuelle der Funkelemente (28) veranlasst, wenigstens während Perioden entsprechend Zeitdauern, während welchen die individuellen der Funkträger für eine Kommunikation zugeordnet sind, wirksam zu sein.

7. Vorrichtung (42) nach Anspruch 1, wobei das Netzwerkteil (12) ein Basisbandteil (24) umfasst und wobei die Ressourcen-Zuordnungseinrichtung (56) weiterhin konfiguriert ist, eine Basisbandteil-Steuerungsnachricht für eine Anwendung für den Basisbandteil zu erzeugen, um einen Betrieb entsprechend Zuordnungen, welche durch die Ressourcen-Zuordnungseinrichtung vorgenommen sind, zu steuern.

8. Vorrichtung (42) nach Anspruch 7, wobei die Basisbandteil-Steuerungsnachricht das Basisbandteil (24) veranlasst, wenigstens während Perioden entsprechend Zeitdauern, während welchen Kommunikationsressourcen nach jedem der Vielzahl von Funkträgern zugeordnet sind, wirksam zu sein.

9. Vorrichtung (78) für eine mobile Station (14), die in einem EDGE, Enhanced Data for GSM Evolution,-fähigen Kommunikationssystems wirksam ist, das einen Kommunikationsdienst mit hoher Geschwindigkeit zur Verfügung stellt und das einen mobilen Zuordnungsindex-Offset definiert, wobei die Vorrichtung umfasst:

Eine Erfassungseinrichtung (82), die konfiguriert ist, eine Zuordnungsnachricht, welche an die mobile Station geliefert ist, zu erfassen, wobei die Zuordnungsnachricht Kommunikationsressourcen, welche der mobilen Station entsprechend der Kommunikation der Daten zugeordnet sind, identifiziert, wobei die Ressourcen, welche der mobilen Station zugeordnet sind, in Zeiten von mobilen Zuordnungsindex-Offsets über eine Vielzahl von mobilen Zuordnungsindex-Offsets definiert sind, wobei die Ressourcen zugeordnet sind, derart, dass Ressourcen für jede bestimmte Zeitdauer in einem Zeitfenster nach einem einzelnen der mobilen Zuordnungsindex-Offsets zugeordnet sind, und

eine Steuerungseinrichtung (84), die geeignet ist, einen Hinweis von Erfassungen, welche durch die Erfassungseinrichtung vorgenommen sind, zu empfangen, wobei die Steuerungseinrichtung konfiguriert ist, einen Betrieb der mobilen Station in Antwort auf die Erfassungen, welche durch die Erfassungseinrichtung vorgenommen sind, zu steuern.

10. Vorrichtung (78) nach Anspruch 9, wobei die mobile Station ein Funkteil umfasst, das Funkelemente (66) aufweist, welche an der Vielzahl von Funkträgern, über welche Kommunikationsressourcen in der Zuordnungsnachricht, welche durch die Erfassungseinrichtung erfasst sind, identifiziert sind.

11. Vorrichtung (78) nach Anspruch 10, wobei die Steuerungseinrichtung (84) weiterhin konfiguriert ist, eine Funkteil-Steuerungsnachricht für eine Anwendung an dem Funkteil zu erzeugen, um einen Betrieb davon in Antwort auf Zuordnungen, welche in der Zuordnungsnachricht identifiziert sind, zu steuern.

12. Verfahren (142) zum Kommunizieren in einem Kommunikationsdienst mit hoher Geschwindigkeit in einem EDGE, Enhanced Data for GSM Evolution,-fähigen Kommunikationssystem, das einen mobilen Zuordnungsindex-Offset zur Verfügung stellt, wobei das Verfahren die Vorgänge umfasst:

Analysieren (144) an einem Netzwerkteil von Kommunikationserfordernissen, die für eine Kommunikation von Daten entsprechend der Kommunikation mit hoher Geschwindigkeit in Antwort auf einen Hinweis einer Charakteristik der Daten erforderlich sind, um benötigte Ressourcen in einer Weise, welche eine dynamische Ressourcenzuordnung ermöglicht, zu bestimmen,

Zuordnen (146) an dem Netzwerkteil in Antwort auf eine Analyse, die während des Vorganges eines Analysierens vorgenommen ist, von Ressourcen über eine Vielzahl von mobilen Zuordnungsindex-Offsets, wobei die Ressourcen über eine Vielzahl von mobilen Zuordnungsindex-Offsets zugeordnet sind, derart, dass Ressourcen für jede bestimmte Zeitdauer nach einem einzelnen der mobilen Zuordnungsindex-Offsets zugeordnet sind, und

Erzeugen (148) einer Zuordnungsnachricht, die die Zuordnung, welche durch den Vorgang eines Zuordnens vorgenommen ist, identifiziert.

13. Verfahren (142) nach Anspruch 12, weiterhin umfassend die Vorgänge:

Senden (152) der Zuordnungsnachricht, die Zuordnungen, welche während des Vorganges eines Zuordnens vorgenommen sind, identifiziert, von dem Netzwerkteil an die mobile Station, und

Verwenden (154) der Zuordnungsnachricht an der mobilen Station, um einen Betrieb davon entsprechend einer Kommunikation der Daten über die Vielzahl von mobilen Zuordnungsindex-Offsets, die während des Vorganges eines Zuordnens zugeordnet sind, zu steuern.

14. Verfahren (142) Anspruch 13, wobei der Vorgang eines Verwendens (154) ein Anwenden von Funkteil-Steuerungsnachrichten an Funkelementen der mobilen Station umfasst, wobei die Funkteil-Steuerungsnachrichten einen Betrieb der Funkelemente veranlassen, um einen Empfang der Daten, die mittels der Kommunikationsressourcen, welche während des Vorganges eines Zuordnens zugeordnet sind, zu ermöglichen.

15. Verfahren (142) nach Anspruch 14, wobei Zuordnungen der Ressourcen, die während des Vorganges eines Zuordnens vorgenommen sind (146), weiterhin auf Reaktionszeiten, welche einen Betrieb der Funkelemente des Funkteiles erfordern, antworten.

16. Verfahren (142) nach Anspruch 15, wobei die Reaktionszeiten Zeitdauern, welche die Funkelemente erfordern, zu einem mobilen Zuordnungsindex-Offset der Vielzahl von mobilen Zuordnungsindex-Offsets zu tunen, umfassen.

**17.** Verfahren (142) nach Anspruch 15, wobei Ressourcen, die während des Vorganges eines Zuordnens zugeordnet sind (146), weiter auf Nicht-Kommunikationsmessungserfordernisse, die von wenigstens einem des Netzwerkteiles und der mobilen Station erforderlich sind, antworten.

**Revendications**

**1.** Appareil (42) destiné à une partie de réseau d'un système de communication (10) capable de fonctions EDGE, pour « *Enhanced Data for GSM Evolution* » - données améliorées pour évolution GSM, qui fournit un service de communication à grande vitesse et qui définit la communication pour un index MAIO, pour « *Mobile Allocation Index Offset* » - Décalage d'index d'attribution à un mobile, ledit appareil comprenant :

un analyseur (54), conçu pour recevoir une indication d'une caractéristique des données qui doivent être communiquées à l'aide du service de communication à grande vitesse, ledit analyseur étant configuré pour analyser les besoins de communication exigés pour la communication des données et pour déterminer des ressources nécessaires d'une manière qui permette une attribution dynamique des ressources ;
un dispositif d'attribution de ressources (56), conçu pour recevoir une indication de l'analyse effectuée par ledit analyseur, ledit dispositif d'attribution de ressources étant configuré pour attribuer des ressources définies en termes d'index MAIO pour la communication des données, les ressources étant attribuées sur une pluralité d'index MAIO de manière à ce que, sur toute période de temps dans une trame de temps, des ressources ne soient attribuées que sur un seul des index MAIO ; et
un générateur de message d'attribution (58), conçu pour recevoir une indication de l'attribution faite par ledit dispositif d'attribution de ressources, ledit générateur de message d'attribution étant configuré pour produire un message d'attribution qui identifie l'attribution effectuée par ledit dispositif d'attribution de ressources.

**2.** Appareil (42) selon la revendication 1, dans lequel ledit dispositif d'attribution de ressources (56) est en outre conçu pour recevoir une indication d'une sélection d'un unique index MAIO par période de temps de fonctionnement sur lequel communiquer les données, les ressources attribuées par ledit dispositif d'attribution de ressources répondant en outre à l'indication de la sélection de l'unique index MAIO par période de temps de fonctionnement.

**3.** Appareil (42) selon la revendication 2, dans lequel la partie de réseau (12) est en mesure de communiquer avec une station mobile (14), et dans lequel le message d'attribution produit par ledit générateur de message d'attribution (58) est envoyé à la station mobile.

**4.** Appareil (42) selon la revendication 1, dans lequel la partie de réseau (12) comprend une partie radio ayant des éléments radio (28) en mesure de fonctionner à une pluralité de porteuses radio entre lesquelles ledit dispositif d'attribution de ressources attribue les ressources.

**5.** Appareil (42) selon la revendication 4, dans lequel ledit dispositif d'attribution de ressources (56) est en outre configuré pour produire un message de commande de la partie radio destiné aux éléments radio (28) de la partie radio, afin de commander le fonctionnement de cette dernière.

**6.** Appareil (42) selon la revendication 5, dans lequel le message de commande de la partie radio ordonne à des éléments individuels parmi les éléments radio (28) d'être en mesure de fonctionner au moins pendant des périodes qui correspondent à des périodes de temps pendant lesquelles les porteuses individuelles, parmi les porteuses radio, sont attribuées pour la communication.

**7.** Appareil (42) selon la revendication 1, dans lequel la partie de réseau (12) comprend une partie en bande de base (24), et dans lequel ledit dispositif d'attribution de ressources (56) est en outre configuré pour produire un message de commande de la partie en bande de base destiné à la partie en bande de base, afin de commander le fonctionnement en fonction d'attributions faites par ledit dispositif d'attribution de ressources.

**8.** Appareil (42) selon la revendication 7, dans lequel le message de commande de la partie en bande de base ordonne à la partie en bande de base (24) d'être en mesure de fonctionner au moins pendant des périodes correspondant à des périodes de temps pendant lesquelles des ressources de communication sont attribuées sur l'une quelconque des porteuses parmi la pluralité de porteuses radio.

**9.** Appareil (78) destiné à une station mobile (14) pouvant fonctionner dans un système de communication capable de fonctions EDGE, pour « *Enhanced Data for GSM Evolution »,* qui fournit un service de communication à grande vitesse et qui définit un index MAIO, ledit appareil comprenant :

un détecteur (82) configuré pour détecter un message d'attribution délivré à la station mobile, le message d'attribution identifiant des ressources de communication attribuées à la station mobile pour la communication de données, les ressources attribuées à la station mobile étant définies en termes d'index MAIO sélectionnés parmi une pluralité d'index MAIO, les ressources étant attribuées de telle manière que, pour toute période de temps particulière dans une trame de temps, des ressources ne soient attribuées que sur un seul des index MAIO ; et

un dispositif de commande (84) conçu pour recevoir une indication de détections faites par ledit détecteur, ledit dispositif de commande étant configuré pour commander le fonctionnement de la station mobile en réponse aux détections faites par ledit détecteur.

10. Appareil (78) selon la revendication 9, dans lequel la station mobile comprend une partie radio comptant des éléments radio (66) en mesure de fonctionner à la pluralité de porteuses radio à travers lesquelles des ressources de communication sont identifiées dans le message d'attribution détecté par ledit détecteur.

11. Appareil (78) selon la revendication 10, dans lequel ledit dispositif de commande (84) est en outre configuré pour produire un message de commande de la partie radio, destiné à la partie radio, dans le but de commander son fonctionnement en réponse aux attributions identifiées dans le message d'attribution.

12. Procédé (142) de communication dans un service de communication à grande vitesse dans un système de communication capable de fonctions EDGE, pour « *Enhanced Data for GSM Evolution* », qui fournit un index MAIO, pour *« Mobile Attribution Index Offset* », ledit procédé comprenant les opérations suivantes :

analyser (144), sur une partie de réseau, les besoins de communication exigés pour la communication de données selon la communication à grande vitesse en réponse à une indication d'une caractéristique des données, afin de déterminer des ressources nécessaires d'une manière qui permette une attribution dynamique des ressources ;

attribuer (146) des ressources parmi une pluralité d'index MAIO, sur la partie de réseau, en réponse à l'analyse effectuée pendant ladite opération d'analyse, les ressources étant attribuées sur la pluralité d'index MAIO de manière à ce que, sur toute période de temps particulière, des ressources ne soient attribuées que sur un seul des index MAIO ; et

produire (148) un message d'attribution qui identifie l'attribution effectuée pendant ladite opération d'attribution.

13. Procédé (142) selon la revendication 12, comprenant en outre les opérations suivantes :

envoyer (152) le message d'attribution qui identifie les attributions faites pendant ladite opération d'attribution entre la partie de réseau et une station mobile ; et

utiliser (154) le message d'attribution sur la station mobile pour commander le fonctionnement de celle-ci en fonction de la communication des données sur la pluralité des index MAIO attribués pendant ladite opération d'attribution.

14. Procédé (142) selon la revendication 13, dans lequel ladite opération d'utilisation (154) comprend l'application de messages de commande de la partie radio à des éléments radio de la station mobile, les messages de commande de la partie radio faisant fonctionner les éléments radio de manière à permettre la réception des données communiquées à l'aide des ressources de communication attribuées pendant ladite opération d'attribution.

15. Procédé (142) selon la revendication 14, dans lequel les attributions des ressources faites pendant ladite opération d'attribution (146) répondent également aux délais de réaction nécessaires dans le fonctionnement des éléments radio de la partie radio.

16. Procédé (142) selon la revendication 15, dans lequel les délais de réaction comprennent des périodes de temps qui sont nécessaires pour que les éléments radio se syntonisent sur un index MAIO parmi la pluralité d'index MAIO.

17. Procédé (142) selon la revendication 15, dans lequel les ressources attribuées pendant ladite opération d'attribution (146) répondent également à des besoins de mesure de non communication qui sont nécessaires pour au moins soit la partie de réseau, soit la station mobile.

**FIG. 1**

FIG. 2

<u>142</u>

```
┌─────────────────────────┐
│   ANALYZE COMMUNICATION  │
│   REQUIREMENTS FOR THE   │~ 144
│ COMMUNICATION OF THE DATA│
└─────────────────────────┘
            │
            ▼
┌─────────────────────────┐
│   ALLOCATE COMMUNICATION │
│ RESOURCES ACROSS PLURALITY│~ 146
│    OF RADIO CARRIERS     │
└─────────────────────────┘
            │
            ▼
┌─────────────────────────┐
│        GENERATE          │
│       ALLOCATION         │~ 148
│        MESSAGE           │
└─────────────────────────┘
            │
            ▼
┌─────────────────────────┐
│          SEND            │
│       ALLOCATION         │~ 152
│        MESSAGE           │
└─────────────────────────┘
            │
            ▼
┌─────────────────────────┐
│  USE ALLOCATION MESSAGE  │
│  TO CONTROL OPERATION    │~ 154
│  OF RECEIVING STATION    │
└─────────────────────────┘
```

## FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0938208 A
- US 6597672 B